# EUROPÄISCHE PATENTSCHRIFT

(11) **EP 1 098 802 B1**
(45) Veröffentlichungstag und Bekanntmachung des Hinweises auf die Patenterteilung: **19.06.2002**
(21) Anmeldenummer: 99934715.6
(22) Anmeldetag: 21.07.1999
(51) Int. Cl.: B61G 11/16, B61D 15/06, F16F 7/12

(54) **ENERGIEVERZEHRELEMENT FÜR SCHIENENFAHRZEUGE**
ENERGY-CONSUMING ELEMENT FOR RAILWAY VEHICLES
ELEMENT CONSOMMATEUR D'ENERGIE DESTINE AUX VEHICULES FERROVIAIRES

(30) Priorität: 23.07.1998 DE 19833250
(43) Veröffentlichungstag der Anmeldung: 16.05.2001
(73) Patentinhaber: Siemens Krauss-Maffei Lokomotiven GmbH, 80997 München (DE)
(72) Erfinder: SCHNEIDER, Sieghard, D-81247 München (DE)
(74) Vertreter: Zedlitz, Peter, Dipl.-Inf.
(86) Internationale Anmeldenummer: EP9905188
(87) Internationale Veröffentlichungsnummer: WO0005119

(56) Entgegenhaltungen:
- EP-A- 0 009 654
- CH-A- 265 703
- DE-U- 9 311 041
- US-A- 3 308 908

## Beschreibung

Die Erfindung betrifft ein Energieverzehrelement mit kastenartigen Aufbau, vorzugsweise für Schienenfahrzeuge, und mit einer Triggerung gemäß dem Oberbegriff von Patentanspruch 1 sowie ein Verfahren zur Herstellung derartiger Energieverzehrelemente.

Übliche Energieverzehrelemente bestehen meist aus dünnwandigen Säulen oder Kasten mit vier-, sechsoder achteckigem Querschnitt. Bei Überschreiten der Auslösekraft versagen diese Crashelemente in der Regel durch axialen Faltenkollaps. Dieser findet in regelmäßiger Faltung statt, wobei benachbarte Seiten stets abwechselnd nach innen oder außen aus- oder eingestülpt werden (sogenannter asymmetrischer Modus). Selten, z.B. bei zylindrischen Rohren, gibt es symmetrische Moden, d.h. Faltungen aller Seiten eines Querschnitts synchron nach außen und eines folgenden Querschnitts synchron nach innen. Dieser Modus wird in der Regel vermieden, weil er einen ungleichmäßigeren Kraftverlauf und eine geringere Eigenstabilität aufweist. Ein Grundproblem der Energieverzehrelemente, die durch Faltenbildung versagen, besteht in der hohen Auslösekraft, die zur Bildung der ersten Falte benötigt wird. Dadurch wird die Fahrzeugstruktur beim Aufprall stark belastet. Außerdem ist bei gleichbleibendem Querschnitt der Ort der Entstehung der ersten Falte ungewiss, da er theoretisch zufällig ist und in der Praxis von Materialunregelmäßigkeiten bestimmt wird. Beide Probleme werden üblicherweise durch Anwendung eines sogenannten Triggers (Versagensinitiator) gelöst. Dazu werden an der erwünschten Stelle, an der die erste Falte entstehen soll, Kerben, Sicken, Löcher oder andere geometrische Störungen in die Träger eingebracht.
Aus der DE-PS 196 35 221 ist ein Energieverzehrelement mit kastenartigem Aufbau für Schienenfahrzeuge bekannt, das zwischen dem Hauptrahmen des Schienenfahrzeugs und dessen Pufferelementen angeordnet wird und das nach der Maßgabe mit Schwachstellen versehen ist, daß sich bei Aufprallbelastung vom Pufferelement zum Hauptrahmen progressiv fortschreitend parallele Faltungen ergeben. Weitere Angaben zur Triggerung sind dieser Druckschrift nicht zu entnehmen.

Aus der gattungsbildenden Zeitschrift ZEV+DET Glas.Ann. 121 (1997) Nr. 12 Dezember, Seite 609 bis 611 sind verschiedene Energieverzehrelemente beschrieben, die mit einer Triggerung versehen sind. Unter anderem ist ein Stahlkasten als Absorber beschrieben und dargestellt, bei dem auf der Ober- und Unterseite über die Länge des Kastens verteilt Stege angeordnet sind. Nachteilig an diesem Energieverzehrelement mit Triggerung ist zum einen der fertigungstechnische Aufwand zum Anbringen der Stege an den Kasten und zum anderen ist fraglich, inwieweit eine progressiv fortschreitende Faltenbildung durch die Stege unterstützt oder vielleicht eher behindert wird. Damit die Faltenbildung von den Stegen unterstützt wird, sind diese entsprechend der späteren Faltenbildung vergleichsweise exakt zu positionieren.

Demgegenüber liegt der Erfindung die Aufgabe zugrunde, ein Energieverzehrelement mit kastenartigem Aufbau und mit Triggerung anzugeben, das vergleichsweise einfach herzustellen ist und bei dem lediglich der Ort der ersten Faltenbildung und die Richtung der weiteren Faltenbildung vorgegeben werden, so daß die weitere Faltenbildung ungehindert aber definiert ablaufen kann. Weiterhin liegt der Erfindung die Aufgabe zugrunde, ein Herstellungsverfahren anzugeben, mit dem das Energieverzehrelement auf einfache Art und Weise und mit den im Schienenfahrzeugbau üblichen Werkzeugen herstellbar ist.

Zur Lösung dieser Aufgabe wird ein Energieverzehrelement mit den Merkmalen von Patentanspruch 1 vorgeschlagen. Vorteilhafte Ausgestaltungen des Energieverzehrelements finden sich in Unteransprüchen 2 bis 7. Hinsichtlich des Herstellungsverfahrens erfolgt die Lösung durch ein Verfahren mit den Merkmalen von Patentanspruch 8. Vorteilhafte Ausgestaltungen des Herstellungsverfahrens finden sich in den Unteransprüchen 9 bis 13.

Es hat sich gezeigt, daß die Vorgabe einer axialen Faltung an einem Ende des Kastens mit der Maßgabe, daß die Faltung in Umlaufsrichtung derart ausgebildet ist, daß bei benachbarten Seiten die Amplitude der Faltung in einer gegengesetzten Richtung läuft, ausreichend ist, um Ort und Richtung der Faltungsbildung in geeigneter Weise vorzugeben. Mit dieser Maßnahme wird vorteilhaft auch die Auslösekraft zur Bildung der ersten Falte reduziert, so daß die Fahrzeugstruktur beim Aufprall weniger belastet wird. Aufgrund der einfachen Ausgestaltung des erfindungsgemäßen Energieverzehrelements ist es möglich, dieses vergleichsweise einfach und mit den im Schienenfahrzeugbau eingesetzten Fertigungsmethoden kostengünstig herstellen zu können, da ausgehend von ebenen Flächen nur wenige Fertigungsschritte erforderlich sind, nämlich: Ausschneiden der Blechkontur, Abkanten und Schweißverbindungen. In vorteilhafter Ausgestaltung der Erfindung besitzt die Faltung gemäß dem Patentanspruch 2 eine Länge, die kleiner ist als die Hälfte der Deformationswellenlänge in diesem Bereich und vorzugsweise etwa einem Viertel dieser Wellenlänge entspricht. Die konische Ausgestaltung des Energieverzehrelements gemäß Unteranspruch 4 hat zusätzlich den Vorteil einer erhöhten Stabilität des Elements gegenüber seitlichen Kräften und Momenten sowie gegenüber exzentrischen Längskräften. Zur Unterstützung der Faltungsbildung können in den Kastenecken Ausnehmungen vorgesehen werden, da gerade die Eckbereiche maßgeblich für die Steifigkeiten sind, und geometrische Formabweichungen in diesem Bereich zur Reduzierung der benötigten Auslösekraft zur Bildung der ersten Falte beitragen.

Nachfolgend wird die Erfindung anhand von Ausführungsbeispielen und unter Bezugnahme auf die Figuren 1 bis 8 näher erläutert.
Es zeigen:
Fig. 1 quaderförmiges Energieverzehrelement,
Fig. 2 Abwicklung einer Hälfte eines Energieverzehrelements gemäß Fig. 1,
Fig. 3 Seitenansicht eines Energieverzehrelementsgemäß Fig. 1,
Fig. 4 Draufsicht auf ein Energieverzehrelement gemäß Fig. 1,
Fig. 5 konusförmiges (obeliskartiges) Energieverzehrelement,
Fig. 6 Abwicklung einer Hälfte eines Energieverzehrelements gemäß Fig. 5,
Fig. 7 Seitenansicht einer Hälfte eines Energieverzehrelements gemäß Fig. 5,
Fig. 8 Draufsicht auf ein Energieverzehrelement gemäß Fig. 5.

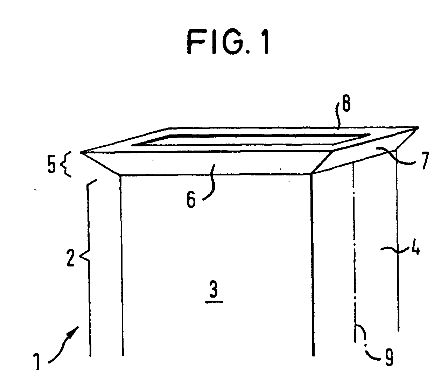

In einem ersten Ausführungsbeispiel soll ein quaderförmiges Energieverzehrelement gemäß der vorliegenden Erfindung unter Bezugnahme auf die Figuren 1 bis 4 beschrieben werden.
Gemäß Fig. 1 weist ein quaderförmiges Energieverzehrelement 1 den eigentlichen Quader 2 und am oberen Ende als Triggerung eine axiale Faltung 5 auf. Das sich an dem vorderen Seitenteil 3 des Quaders anschließende Endstück 6 der Faltung ist im dargestellten Beispiel in Richtung auf das Quaderinnere abgeknickt, während das sich an das rechte Seitenteil 4 des Quaders 2 anschließende Endstück 7 der axialen Faltung 5 von der Quaderoberfläche nach außen abgeknickt ist. Um den Querschnitt des Energievezehrelements 1 am Ende der axialen Faltung 5 zu stabilisieren, ist ein Flansch 8 auf der axialen Faltung 5 befestigt. Trennt man den Quader durch einen Längsschnitt entlang einer Ebene, die parallel zu einer der Quaderseitenflächen liegt, z.B. eine mittige Teilung gemäß einer Ebene, die senkrecht auf dem Seitenteil 4 steht und bei der Linie 9 in den Quader 2 eindringt, wird das Energieverzehrelement in zwei Hälften zerlegt, die jede für sich zu einer Ebene abgewickelt werden und damit die Außenkontur der Ebenenfläche für die spätere Fertigung vorgeben.

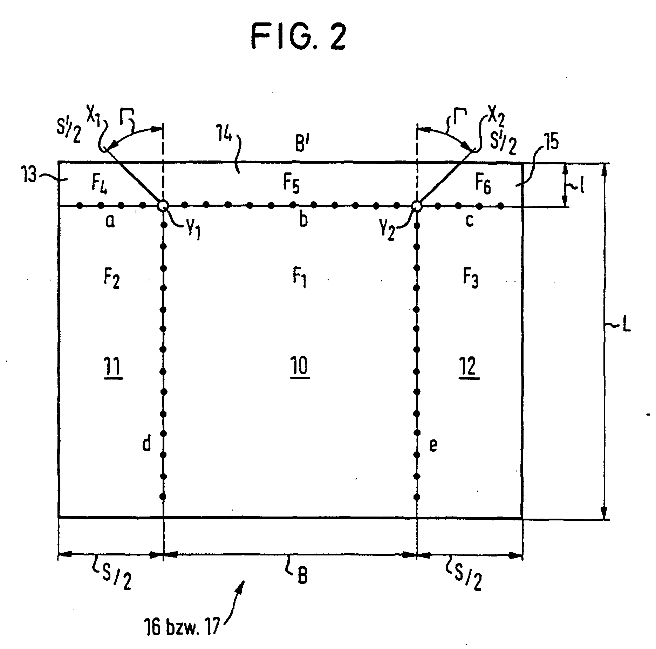

im abgewickelten Zustand ergibt jede Hälfte des Quaders ein Rechteck gemäß Fig. 2. Für die nachfolgenden Ausführungen soll davon ausgegangen werden, daß der Schnitt durch das Energieverzehrelement in Seitenansicht gesehen mittig erfolgt, so daß ein Ober- und ein Unterteil mit je zwei halben Seitenteilen entstehen. Gemäß Fig. 2 besteht eine abgewickelte Hälfte eines quaderförmigen Energieverzehrelements im Ergebnis aus einem Rechteck der Länge L, die im wesentlichen der Länge des fertigen Energieverzehrelements entspricht, und der Breite B + S, die sich aus der Breite B des Unter- bzw. Oberteils und zwei halben Seitenteilen (links und rechts) mit einer Breite von je S/2 zusammensetzt. An die Flächen F₁ des Unter- bzw. Oberteils und die Flächen F₂ und F₃ der halben Seitenteile schließen sich die Endstücke F₄, F₅ und F₆ der für die Faltung vorgesehenen Endstücke an. Die Länge I der Endstücke ist so zu dimensionieren, daß die Endstücke nach ihrer Faltung bei einer Projektion von I auf die Symmetrieebene in etwa ein Viertel der Deformationswellenlänge in diesem Bereich ergeben. Entlang der Linien X₁Y₁ und X₂Y₂ ist das Blech eingeschnitten, um die Endstücke F₄ bis F₆ zur Herstellung der späteren Faltung um die Biegelinien a, b und c abknicken zu können. Das Abknicken der halben Seitenteile erfolgt entlang der Biegelinien d und e. Je nach Dimensionierung des Winkels Γ, unter dem die Einschnitte in das ebene Blech zur Erzeugung der Endstücke erfolgen, wird das Endstück F₅ mehr (großer Winkel) oder weniger (kleiner Winkel) nach oben abgeknickt. Entsprechend werden die seitlichen Endstücke F₄ und F₆ mehr oder weniger nach außen (am fertigen Kasten) abgeknickt. Zum Herstellen der unteren und der oberen Blechschale wird nun wie folgt vorgegangen:
- Herstellung eines Flachblechs der Größe L x (B+S);
- Einschneiden des Flachblechs entlang der Linien X1Y1 und X₂Y₂;
- F₄ und F₆ über die Kanten a bzw. c nach unten biegen und F₅ über die Kante b nach oben biegen;
- F₂ und F₃ über die Kanten d und e nach oben biegen;
- Zusammenschweißen der gebogenen Abschnitte F₄, F₅ und F₆ an ihren sich nunmehr wieder berührenden Linien X₁Y₁ und X₂Y₂.

Nunmehr werden zwei auf diese Weise hergestellte Kastenhälften (Ober- und Unterteil) aufeinander gestellt und an der Berührungslinie umlaufend zusammengeschweißt. Zur Stabilisierung des Querschnitts am Ende der Faltung wird vorzugsweise noch ein Flansch aufgebracht.

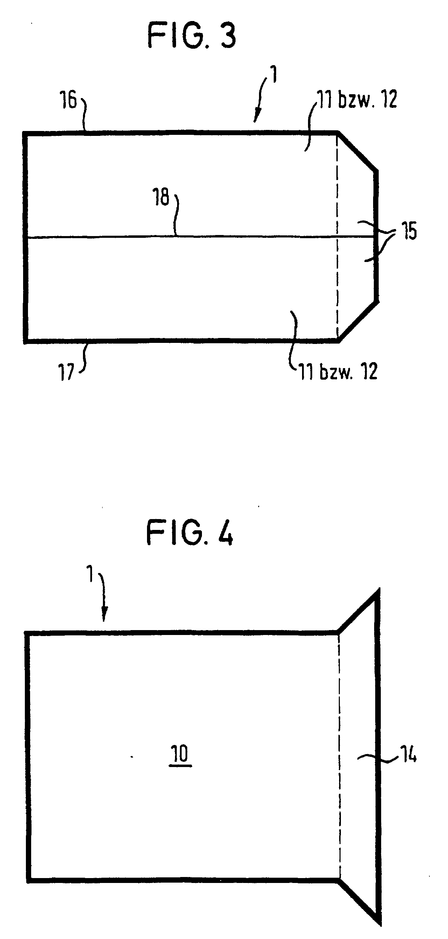

Fig. 3 zeigt das quaderförmige Energieverzehrelement 1 in Seitenansicht, bestehend aus einer oberen Blechschale 16 und einer unteren Blechschale 17, die entlang der Linie 18 zusammengeschweißt sind. Die Endstücke 15 (Faltungsstücke) sind entlang der gestrichelten Linie aus der Blattebene heraus gegenüber den Seitenteilen 12 bzw. 11 abgeknickt. Bei der Draufsicht gemäß Fig. 4 liegt das Oberteil 10 in der Blattebene und das obere Endstück 14 (Faltungsstück) ist über die gestrichelte Linie nach unten in die Blattebene hinein abgeknickt. Im Fall des Unterteils kommt das untere Endstück 14 (Faltungsstück) aus der Blattebene heraus. An den mit einem fetten Punkt markierten Positionen laufen die Endstücke 14 von Ober- und Unterteil mit den Endstücken 15 der Seitenteile zusammen. Die zwei Halbkästen bzw. Blechschalen ergeben also im zusammengesetzten Zustand einen quaderförmigen Kasten mit einer Querschnittsfläche von B x S. Dieselbe Querschnittsfläche liegt in der Faltung vor, allerdings sind zwei Seiten gestaucht (S') und zwei Seiten gestreckt (B') gegenüber der Grundform. Im übrigen können die Biegeschritte im Rahmen des fachmännischen Könnens auch in einer anderen Reihenfolge ausgeführt werden.

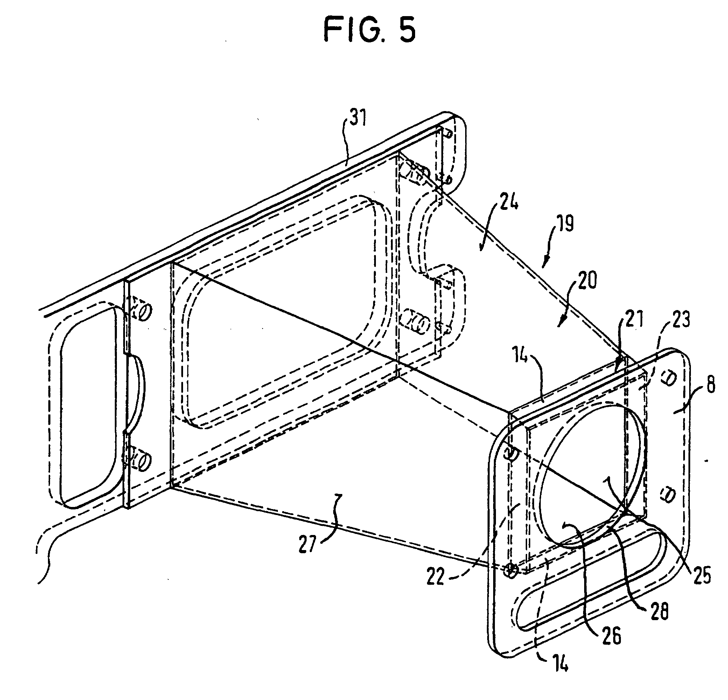

Fig. 5 zeigt ein erfindungsgemäßes Energieverzehrelement 19 in konusförmiger (Obeliskartiger) Ausgestaltung, das an einem Träger oder Rahmenteil 31 am Schienenfahrzeug befestigt ist. Das Energieverzehrelement besteht aus dem eigentlichen Kasten 20 (Obelisk), an das sich in Richtung vom Schienenfahrzeug weg die axiale Faltung (Triggerung) 21 anschließt. Die Oberseite 24 und die Unterseite 26 des Energieverzehrelements sind im dargestellten Beispiel etwas breiter ausgeführt als die Seitenteile 25 und 27, so daß sich insgesamt ein rechteckförmiger Querschnitt des Kastens 19 ergibt. Bei der axialen Faltung 21 sind oberes (14) und unteres Endstück 14 leicht nach innen abgeknickt, während die seitlichen Endstücke (Faltungsstücke) 22 und 23 von der Oberfläche des Kastens nach außen abgebogen sind. In Verlängerung der axialen Faltung 21 ist ein Flansch 8 aufgebracht, um den Querschnitt des Energieverzehrelements in diesem Bereich zu stabilisieren. Der Flansch 8 verfügt über eine kreisförmige Ausnehmung 28, um einen Mittelflanschpuffer in den Kasten einbringen zu können, so daß lediglich noch der Pufferstößel nach außen vorsteht.

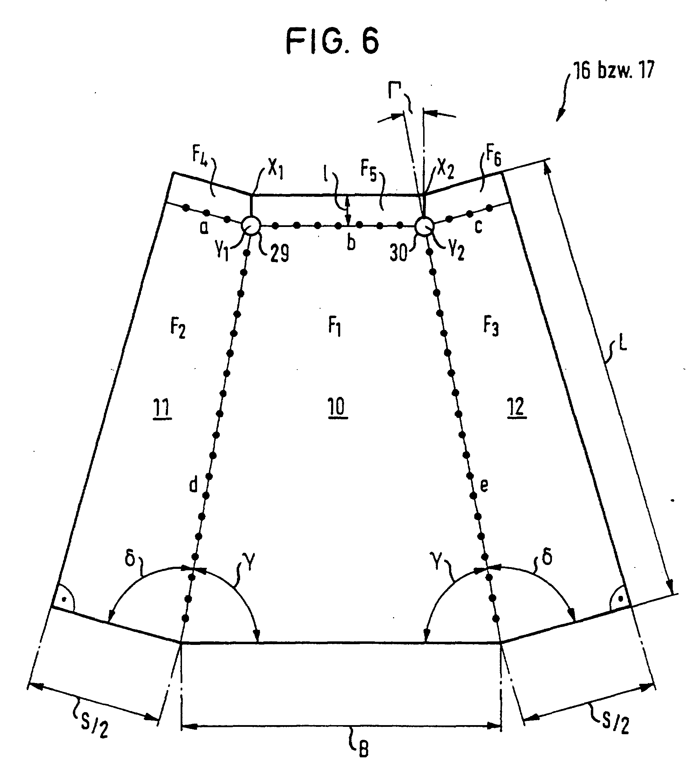

Fig. 6 zeigt die Abwicklung 16 bzw. 17 einer Hälfte eines Energieverzehrelements gemäß Fig. 5, die durch einen Längsschnitt durch die Symmetrieebene in der Mitte des Energieverzehrelements entstanden ist. Ausgangspunkt bei der Herstellung eines erfindungsgemäßen Energieverzehrelements 19 ist die Herstellung von Flachblechen mit einer Kontur gemäß der abgewickelten Hälfte eines Energieverzehrele-ments gemäß Fig. 6, also mit folgenden Flächenelementen:
F₁ = gleichschenkeliges Trapez mit den Grundlinien B und b und den Seitenlinien d und e, wobei d gleich e ist und den Biegelinien zwischen Unter- bzw. Oberteil und den Seitenteilen entspricht;
F₂ = F₃ = je eine Hälfte eines gleichschenkligen Trapez mit den-Grundlinien S/2 und a bzw. c und den Seitenlinien d bzw. e, wobei d = e ist und den besagten Biegelinien entspricht;
F₄ + F₅ + F₆ = abgewickelte Faltung der Länge I, wobei I so zu demensionieren ist, daß bei Projektion von I auf die Symmetrieebene im gefaltenen Zustand die Länge in etwa einem Viertel der Defomationswellenlänge in diesem Bereich entspricht Es wird also zunächst ein Flachblech (bzw. zwei, für Ober- und Unterteil) mit einer Kontur hergestellt, die der Summe der Flächen F₁ bis F₆ entspricht Anschließend werden entlang der Linien X₁Y₁ und X₂Y₂ Einschnitte in das Flachblech eingebracht Außerdem wird das Flachblech im Bereich der Schnittpunkte der Biegelinie der für die Faltung vorgesehenen Endstücke F₄, F₅ und F₆ mit kreisförmigen Ausnehmungen 29, 30 versehen. Auch hier gilt, daß je nach Demensionierung des Winkels Γ, unter dem die Einschnitte des ebenen Blechs zur Erzeugung der Endstücke erfolgen, das Endstück F₅ mehr (großer Winkel) oder weniger (kleiner Winkel) nach oben abgeknickt. Entsprechend werden die seitlichen Endstücke F₄, F₆ mehr oder weniger nach außen (am fertigen Kasten) abgeknickt. Je größer der Winkel Γ ist, umso stärker ist die Schwächung des Energieverzehrelements in diesem Bereich, denn das Endstück F₅ wird stark nach innen abgeknickt Unter anderem läßt sich also durch die Einstellung des Winkels Γ die Auslösekraft zur Einleitung der Faltenbeulung einstellen. Die Winkel γ, δ richten sich danach, wie sich der Querschnitt des späteren Kastens vom aufprallseitigen Ende Kastens ausgehend stetig erweitert soll. Ist beispielsweise δ = 90°, erweitert sich der Querschnitt nur durch die Trapezform von unterem und oberen Seitenteil. Für δ kleiner 90° und γ kleiner 90° ergibt sich die in Fig. 5 dargestellte Form des Energieverzehrelements (konusförmig bzw. obeliskartig). Die weitere Herstellung der unteren und der oberen Blechschale erfolgt nun analog wie beim quaderförmigen Energieverzehrelement, d.h.:

- F₄ und F₆ werden über die Kanten a bzw. c nach unten gebogen und F₅ wird über die Kante b nach oben gebogen;
- F₂ und F₃ über die Kanten d und e nach oben biegen;
- Zusammenschweißen der gebogenen Abschnitte F₄, F₅ und F₆
- an ihren sich nun mehr wieder berührenden Linien X₁Y₁ und X₂Y₂.

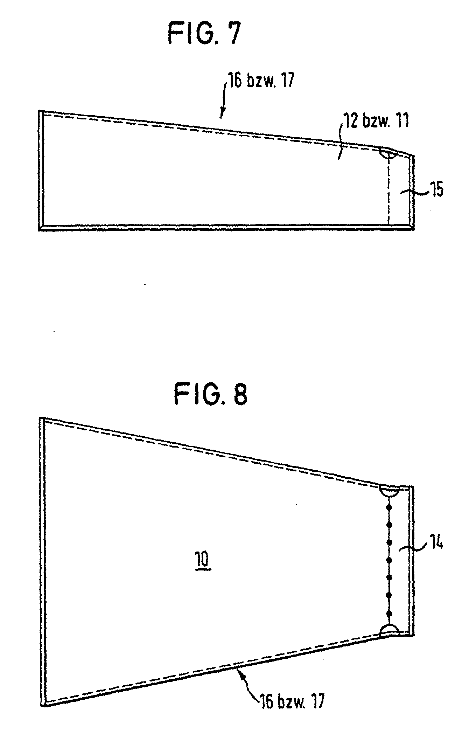

Die auf diese Weise hergestellten Kastenhälften (Ober- und Unterteil) werden aufeinandergestellt und an der Berührungslinie umlaufend zusammengeschweißt. Zur Stabilisierung des Querschnitts am Ende der Faltung kann noch ein Flansch aufgebracht werden. Fig. 7 zeigt eine Hälfte des konusartigen Energieverzehrelements 1 in Seitenansicht eine untere oder eine obere Blechschale 16 bzw. 17. Das Endstück 15 (Faltenstück) ist entlang der gestrichelten Linie aus der Blattebene raus gegenüber dem Seitenteil 12 bzw. 11 abgeknickt Bei der Draufsicht gemäß Fig. 8 liegt das Oberteil 10 in der Blattebene und das obere Endstück 14 (Faltungsstück) ist über die gestrichelte Linie nach unten in die Blattebene hinein abgeknickt. Im Fall des Unterteils kommt das untere Endstück 14 (Faltungsstück) aus der Blattebene heraus.

Anstelle der Erzeugung von oberen und unteren Blechschalen durch einen mittigen Schnitt bei Seitenansicht, kann das Energieverzehrelement auch in linke und rechte Blechschalen zerlegt werden (Schnitt orthogonal zu dem zuvorgenannten Schnitt).

Anstelle der Öffnung 28 kann der Flansch 8 auch geschlossen ausgeführt sein und darauf ein Standardpuffer befestigt werden.

### Bezugszeichenliste

- 1: Quaderförmiges Energieverzehrelement
- 2: Quader
- 3,4: Seitenteile des Quaders
- 5: axiale Faltung am Quaderende
- 6: nach innen abgeknicktes Endstück
- 7: nach außen abgeknicktes Endstück
- 8: Flansch
- 9: Lage der Trennebene
- 10: Unter- bzw. Oberteil
- 11: halbes Seitenteil links
- 12: halbes Seitenteil rechts
- 13: halbes linkes Endstück (Faltungsstück)
- 14: unteres bzw. oberes Endstück (Faltungsstück)
- 15: halbes rechtes Endstück (Faltungsstück)
- 16: obere Blechschale
- 17: untere Blechschale
- 18: Schweißnaht
- 19: konusförmiges (obeliskartiges) Energieverzehrelement
- 20: Obelisk
- 21: axiale Faltung am Obeliskende
- 22,23: seitliche Endstücke (Faltungsstücke)
- 24: Oberseite des Energieverzehrelements
- 25,27: Seitenteile des Energieverzehrelements
- 26: Unterseite des Energieverzehrelements
- 27: Träger oder Rahmenteil am Schienenfahrzeug
- 28: Öffnung zur Aufnahme eines Mitteflanschpuffers
- 29,30: kreisförmige Öffnungen

## Patentansprüche

1. Energieverzehrelement (1) mit kastenartigem Aufbau, vorzugsweise für Schienenfahrzeuge, und mit Triggerung für die Vorgabe der Faltenbildung des kastenartigen Aufbaus, **dadurch gekennzeichnet, dass** die Triggerung als axiale Faltung der Seitenflächen (3, 4) des Kastens an einem Ende des Kastens ausgebildet ist und dass die Faltung in Umlaufrichtung um die Seitenflächen (3, 4) des Kastens derart ausgebildet ist, dass bei benachbarten Seitenflächen (3, 4) die Amplitude der Faltung in einer entgegengesetzten Richtung liegt.

2. Energieverzehrelement (1) nach Anspruch 1, **dadurch gekennzeichnet, daß** die Faltung eine Länge besitzt, die kleiner als die Hälfte der Deformationswellenlänge ist, vorzugsweise im wesentlichen einem Viertel dieser Wellenlänge entspricht.

3. Energieverzehrelement (1) nach Anspruch 1 oder 2, **dadurch gekennzeichnet, daß** der Kasten einen vier-, sechs oder achteckigen Querschnitt besitzt.

4. Energieverzehrelement (1) nach Anspruch 3, **dadurch gekennzeichnet, daß** sich die Querschnittsform ausgehend vom aufprallseitigen Ende des Kastens stetig erweitert.

5. Energieverzehrelement (1) nach einem der Ansprüche 1 bis 4, **dadurch gekennzeichnet, daß** an dem getriggerten Ende des Kastens ein den Querschnitt stabilisierendes Element, z.B. ein Flansch (8), vorgesehen ist.

6. Energieverzehrelement (1) nach einem der Ansprüche 1 bis 5, **dadurch gekennzeichnet, daß** am aufprallseitigen Ende des Kastens eine Öffnung zur Aufnahme eines Mittelflanschpuffers vorgesehen ist.

7. Energieverzehrelement (1) nach einem der Ansprüche 1 bis 6, **dadurch gekennzeichnet, daß** die Faltung in Umlaufsrichtung mit Ausnehmungen in den Kastenecken ausgebildet ist.

8. Verfahren zur Herstellung eines Energieverzehrelements (1) gemäß einem der Ansprüche 1 bis 7, **gekennzeichnet durch** folgende Schritte:
- Bereitstellen von ebenen Blechen, deren Kontur nach folgender Maßgabe ausgeschnitten ist: **durch** einen Längsschnitt **durch** den - gedanklich bzw. im Modell fertigen - Kasten entstandene obere (16) und untere Blechschalen (17) werden abgewickelt und diese Abwicklung ergibt jeweils die Kontur der Bleche für die obere (16) und die untere Blechschale (17).
- Markierung folgender Biegelinien:
• .je eine Biegelinie zum Umklappen der Seitenteile der Blechschalen (16; 17),
• .Biegelinien zum Umklappen der zur Faltung an einem Ende des Kastens vorgesehenen Endstücke (14; 15);
- Einbringen der Einschnitte in die für die Faltung vorgesehenen Endstücke vom Rand der Endstücke (14; 15) bis zu den Schnittpunkten der Biegelinien der seitlichen Endstücke mit der Biegelinie des mittleren Endstücks;
- Abkanten der Endstücke (14; 15) über die markierten Biegelinien nach unten bzw. oben um einen solchen Winkel, daß sie sich nach Abschluß aller Biegeschritte berühren und Abkanten der Seitenteile über die zugehörigen Biegelinien nach oben;
- Verschweißen der sich an den Einschnitten berührenden Endstücke, wonach obere und untere Blechschalen (17) fertiggestellt sind;
- Verschweißen von oberer (16) und unterer Blechschale (17).

9. Verfahren nach Anspruch 8, **dadurch gekennzeichnet, daß** es sich bei dem Kasten um einen Quader (2) handelt und die abgewickelten Blechschalen Rechtecke ergeben.

10. Verfahren nach Anspruch 8, **dadurch gekennzeichnet, daß** der Kasten eine konische Form nach Art eines Obelisk besitzt und die abgewickelten Blechschalen jeweils aufweisen:
- - ein trapezförmiges Mittelteil mit einem Trapezwinkel γ,
- - zwei je ein halbes Trapez bildende Seitenteile, die mit ihrer Seitenlinie an die Seitenlinie des mittleren Trapez anschließen und die einen Trapezwinkel δ aufweisen;
- an der schmalen oder der breiten Grundlinie der Trapeze angrenzenden Endstücke für die Triggerfaltung.

11. Verfahren nach einem der Ansprüche 8 bis 10, **dadurch gekennzeichnet, daß** in die ebenen Bleche im Bereich der Schnittpunkte der Biegelinien der seitlichen Endstücke mit der Biegelinie des mittleren Endstücks Ausnehmungen, vorzugsweise kreisförmig (29, 30), eingebracht werden.

12. Verfahren nach Anspruch 11, **dadurch gekennzeichnet, daß** die Ausnehmungen vor dem Abkanten eingebracht werden.

13. Verfahren nach einem der Ansprüche 8 bis 12, **dadurch gekennzeichnet, daß** in axialer Richtung auf die Triggerfaltung ein den Querschnitt des Kastens in diesem Bereich stabilisierendes Element, z.B. ein Flansch (8) aufgebracht wird.

## Claims

1. Energy-consuming element (1) with box-like design, preferably for rail vehicles, and having triggering means for predefining the fold formation of the box-like design, **characterized in that** the triggering means is embodied as an axial fold of the side faces (3, 4) of the box at one end of the box, and **in that** the fold is embodied in the circumferential direction around the side faces (3, 4) of the box in such a way that the amplitude of the fold lies in an opposite direction on adjacent side faces (3, 4).

2. Energy-consuming element (1) according to Claim 1, **characterized in that** the fold is shorter than half the deformation wavelength, preferably corresponding essentially to a quarter of this wavelength.

3. Energy-consuming element (1) according to Claim 1 or 2, **characterized in that** the box has a rectangular, hexagonal or octagonal cross section.

4. Energy-consuming element (1) according to Claim 3, **characterized in that** the cross-sectional shape widens continuously starting from the impact end of the box.

5. Energy-consuming element (1) according to one of Claims 1 to 4, **characterized in that** an element, for example a flange (8), which stabilizes the cross section is provided at the triggered end of the box.

6. Energy-consuming element (1) according to one of Claims 1 to 5, **characterized in that** an opening for receiving a centre flange buffer is provided at the impact end of the box.

7. Energy-consuming element (1) according to one of Claims 1 to 6, **characterized in that** the fold is embodied with cutouts at the corners of the box in the circumferential direction.

8. Method for manufacturing an energy-consuming element (1) according to one of Claims 1 to 7, **characterized by** the following steps:
- Provision of planar plates whose contour is cut out according to the following measure: upper sheet-metal shells (16) and lower sheet-metal shells (17) produced through a longitudinal section through the imaginary box or the finished box in the model are bent over and this bending respectively produces the contour of the metal sheets for the upper sheet-metal shell (16) and the lower sheet-metal shell (17).
- The following bending lines are marked:
• in each case one bending line for turning up the side parts of the sheet-metal shells (16; 17)
• bending lines for turning over the end pieces (14; 15) provided for folding at one end of the box;
- cutting of the indents into the end pieces provided for the fold, from the edge of the end pieces (14; 15) to the intersection points of the bending lines of the lateral end pieces with the bending line of the central end piece;
- the end pieces (14; 15) are bent over the marked bending lines in a downward or upward direction by such an angle that they touch one another after all the bending steps are concluded, and the side parts are bent over the associated bending lines in an upward direction;
- the end pieces which touch one another at the indents are welded, after which upper sheet-metal shells (16) and lower sheet-metal shells (17) are completed;
- the upper sheet-metal shell (16) and lower sheet-metal shell (17) are welded.

9. Method according to Claim 8, **characterized in that** the box is a parallelepiped (2) and the bent-over sheet-metal shells produce rectangles.

10. Method according to Claim 8, **characterized in that** the box has a conical shape in the manner of an obelisk and the bent-over sheet-metal shells each have:
- a trapezoidal centre part with a trapezoidal angle γ;
- two side parts which form half a trapezoid and which adjoin the side line of the central trapezoid with their side line and which have a trapezoidal angle δ;
- end pieces for the trigger folding which adjoin the narrow or wide ground line of the trapezoids.

11. Method according to one of Claims 8 to 10, **characterized in that** cutouts, preferably circular cutouts (29, 30) are made in the planar metal sheets in the vicinity of the intersection points of the bending lines of the lateral end pieces with the bending line of the central end piece.

12. Method according to Claim 11, **characterized in that** the cutouts are made before the folding over operation.

13. Method according to one of Claims 8 to 12, **characterized in that** an element, for example a flange (8), which stabilizes the cross section of the box on the trigger fold is made in the axial direction in this region.

## Revendications

1. Elément absorbeur d'énergie (1) ayant une structure en forme de boîte, de préférence pour véhicules sur rails, et comportant un déclencheur pour prédéfinir la formation de plis de la structure en forme de boîte, **caractérisé en ce que** le déclencheur se présente sous la forme d'un pliage axial des faces latérales (3, 4) de la boîte à une extrémité de la boîte, et **en ce que** le pliage est effectué sur le pourtour des surfaces latérales (3, 4) de la boîte de telle sorte que, pour des faces adjacentes, l'amplitude du pliage se trouve dans une direction opposée.

2. Elément absorbeur d'énergie (1) selon la revendication 1, **caractérisé en ce que** le pliage a une longueur qui est inférieure à la moitié de la longueur de l'onde de déformation, de préférence correspondant environ au quart de la longueur d'onde.

3. Elément absorbeur d'énergie (1) selon la revendication 1 ou 2, **caractérisé en ce que** la boîte a une section quadrangulaire, hexagonale ou octogonale.

4. Elément absorbeur d'énergie (1) selon la revendication 3, **caractérisé en ce que** la section s'élargit sans interruption depuis l'extrémité de la boîte qui se trouve du côté dé la collision.

5. Elément absorbeur d'énergie (1) selon l'une des revendications 1 à 4, **caractérisé en ce qu'**il est prévu un élément de stabilisation de la section, par exemple un rebord (8), à l'extrémité déclenchée de la boîte.

6. Elément absorbeur d'énergie (1) selon l'une des revendication 1 à 5, **caractérisé en ce qu'**il est prévu une ouverture pour recevoir un tampon à bride médian à l'extrémité de la boîte qui se trouve du côté de la collision.

7. Elément absorbeur d'énergie (1) selon l'une des revendications 1 à 6, **caractérisé en ce que** le pliage est conformé périphériquement avec des évidements dans les coins de la boîte.

8. Procédé de fabrication d'un élément absorbeur d'énergie (1) selon l'une des revendications 1 à 7, **caractérisé par** les étapes suivantes :
- préparer des flans plans dont le contour est découpé en tenant compte du fait que : des coques de tôle supérieure (16) et inférieure (17) réalisées selon une coupe longitudinale de la boîte de façon virtuelle ou sous forme de gabarit, sont développées par projection et cette projection développée donne à chaque fois le contour des tôles pour les coques supérieure (16) et inférieure (17).
- repérer les lignes de pliage suivantes ;
* une ligne de pliage pour rabattre les parties latérales des coques de tôle (16 ; 17) ;
* des lignes de pliage pour rabattre la pièce d'extrémité (14 ; 15) prévue pour le pliage à une extrémité de la boîte ;
- rentrer les découpes dans les pièces d'extrémité prévues pour le pliage depuis le bord des pièces d'extrémité (14 ; 15) jusqu'aux points de découpe des lignes de pliage des pièces d'extrémité latérales avec la ligne de pliage de la pièce d'extrémité médiane ;
- plier vers le bas ou vers le haut les pièces d'extrémité (14 ; 15) suivant les lignes de pliage repérées avec un angle tel qu'elles se touchent à la fin de toutes les étapes de pliage et plier vers le bas les parties latérales suivant les lignes de pliage associées ;
- souder les pièces d'extrémité en contact avec les découpes d'extrémité, après quoi les coques de tôle supérieure (16) et inférieure (17) sont terminées ;
- souder les coques de tôle supérieure (16) et inférieure (17).

9. Procédé selon la revendication 8, **caractérisé en ce que** la boîte est un parallélépipède (2) et que les coques de tôle développée par projection forment des rectangles.

10. Procédé selon la revendication 8, **caractérisé en ce que** la boîte a une forme conique du type obélisque et que les coques de tôle développées par projection comportent chacune :
- une pièce médiane en forme de trapèze ayant un angle de trapèze γ ;
- deux pièces latérales, formant un demi-trapèze, qui se raccordent par leur ligne latérale à la ligne latérale du trapèze médian et qui forment un angle de trapèze δ ;
- des pièces d'extrémité, adjacentes au grand côté ou au petit côté du trapèze, pour le pliage du déclencheur.

11. Procédé selon l'une des revendications 8 à 10, **caractérisé en ce que** des évidements 29, 30, de préférence de forme circulaire, sont ménagés dans les tôles planes au niveau des points de découpe des lignes de pliage des pièces d'extrémité avec la ligne de pliage des la pièce d'extrémité médiane.

12. Procédé selon la revendication 11, **caractérisé en ce que** les évidements sont ménagés avant le pliage.

13. Procédé selon les revendications 8 à 12, **caractérisé en ce que**, dans la direction axiale, un élément stabilisant la section de la boîte dans cette région, par exemple un rebord (8), est apporté sur le pliage formant le déclencheur.
